# EUROPÄISCHE PATENTSCHRIFT

(11) **EP 1 287 367 B1**
(45) Veröffentlichungstag und Bekanntmachung des Hinweises auf die Patenterteilung: **15.09.2004**
(21) Anmeldenummer: 01936179.9
(22) Anmeldetag: 03.04.2001
(51) Int. Cl.: G01R 21/133, H04B 17/00

(54) **VERFAHREN ZUR BESTIMMUNG DER DURCHSCHNITTLICHEN LANGZEITLEISTUNG EINES DIGITAL MODULIERTEN SIGNALS**
METHOD FOR THE DETERMINATION OF THE AVERAGE LONG-TERM POWER OF A DIGITAL MODULATED SIGNAL
PROCEDE DE DETERMINATION DE L'INTENSITE A LONG TERME MOYENNE D'UN SIGNAL MODULE NUMERIQUEMENT

(30) Priorität: 02.06.2000 DE 10027388
(43) Veröffentlichungstag der Anmeldung: 05.03.2003
(73) Patentinhaber: Rohde & Schwarz GmbH & Co. KG, 81671 München (DE)
(72) Erfinder: LORENZEN, Rolf, 82008 Unterhaching (DE); PLAUMANN, Ralf, 85659 Preisendorf (DE)
(74) Vertreter: Körfer, Thomas, Dipl.-Phys.
(86) Internationale Anmeldenummer: PCT/EP2001/003792
(87) Internationale Veröffentlichungsnummer: WO 2001/094957

(56) Entgegenhaltungen:
- DE-A- 4 430 349
- DE-A- 19 955 564
- US-A- 6 041 076

## Beschreibung

Die Erfindung betrifft ein Verfahren zur Bestimmung der durchschnittlichen Langzeit-Leistung eines digital modulierten Signals.

Ein digital moduliertes Signal für den Mobilfunk, insbesondere für GSM, besteht üblicherweise aus einzelnen Sendeblöcken (Bursts), die durch eine Inphase-Komponente I und eine Komplementärphase-Komponente Q digital moduliert sind. Die Modulation erfolgt beispielsweise als 8PSK.

Bei der Messung der Leistung eines solchen Signals besteht die Problematik, daß die gemessene Leistung innerhalb des Meßintervalls von den Modulationsdaten abhängig ist. Tatsächlich ist aber die durchschnittliche Langzeit-Leistung gemittelt über ein theoretisch unendliches Zeitinterval interessant. Zur Ermittlung dieser Langzeit-Leistung war es bisher üblich, sehr viele Sendeblöcke (Bursts) zu messen und das gemessene Signal entsprechend zu mitteln. Dies bedingt jedoch relativ lange Meßzeiten und ist deshalb nachteilig. Ein entsprechendes Verfahren ist in DE 4430349 beschrieben.

Der Erfindung liegt deshalb die Aufgabe zugrunde, ein Verfahren zur Bestimmung der durchschnittlichen Langzeit-Leistung eines digital modulierten Signals anzugeben, das die Messung in nur einem Sendeblock (Burst) innerhalb eines relativ kurzen Meßintervalls erlaubt.

Die Aufgabe wird durch die Merkmale des Anspruchs 1 gelöst.

Die Erfindung macht sich die Erkenntnis zu Nutze, daß eine Kurzzeitmessung innerhalb eines relativ kurzen Zeitintervals zur Bestimmung der Langzeit-Leistung ausreichend ist, wenn der Dateninhalt innerhalb des gemessenen Zeitausschnitts bestimmt wird und in Abhängigkeit von diesem Dateninhalt die gemessene Leistung korrigiert wird. Erfindungsgemäß wird deshalb vorgeschlagen, beispielsweise durch Demodulation die in dem gemessenen Ausschnitt des Eingangs-Signals enthaltene Datensequenz zu erzeugen und mit dieser Datensequenz einen Modulator mit einer vorgegebenen Referenz-Aussteuerung anzusteuern, wobei die durchschnittliche Langzeit-Leistung des Referenzsignals bei der Referenz-Aussteuerung bekannt ist. Bestimmt man in dem zeitlichen Ausschnitt die auf den Dateninhalt bezogene Kurzzeit-Leistung des Referenzsignals, so erhält man einen Korrekturwert, mit welchem die gemessene Kurzzeit-Leistung des Eingangs-Signals korrigiert werden kann.

Die Unteransprüche enthalten vorteilhafte Weiterbildungen der Erfindung.

Die durchschnittliche Langzeit-Leistung des Referenz-Signals wird vorzugsweise durch Modulation mit einer statistischen Datensequenz bei der Referenz-Aussteuerung bestimmt. Diese Bestimmung der Langzeit-Leistung bei der Referenz-Aussteuerung muß nur einmal vorgenommen werden und kann dann als fester Wert abgespeichert werden.

Die Erzeugung des in dem zeitlichen Ausschnitt des Eingangs-Signals enthaltenen Datensequenz erfolgt im einfachsten Fall durch Demodulation des Eingangs-Signals. Das GSM-Signal hat üblicherweise in der Mitte des Sendeblocks (Burst) eine bestimmte Referenzsequenz mit 26 Symbolen. Die Anzahl der verschiedenen Referenzsequenzen ist beschränkt. Erfolgt die Leistungsmessung im Bereich dieser Referenzsequenz, so kann durch Vergleich ggf. ohne Demodulation bestimmt werden, welche Referenzsequenz in dem vermessenen Burst vorliegt. Der Dateninhalt der Referenzsequenz ist dann bekannt.

Nachfolgend werden Ausführungsbeispiele der Erfindung unter Bezugnahme auf die Zeichnung näher erläutert. In der Zeichnung zeigen:
- Fig. 1: ein erstes Ausführungsbeispiel eines Blockschaltbilds zur Durchführung des erfindungsgemäßen Verfahrens;
- Fig. 2: ein Beispiel eines Sendeblocks (Burst) und
- Fig. 3: ein zweites Ausführungsbeispiel eines Blockschaltbilds zur Durchführung des erfindungsgemäßen Verfahrens.

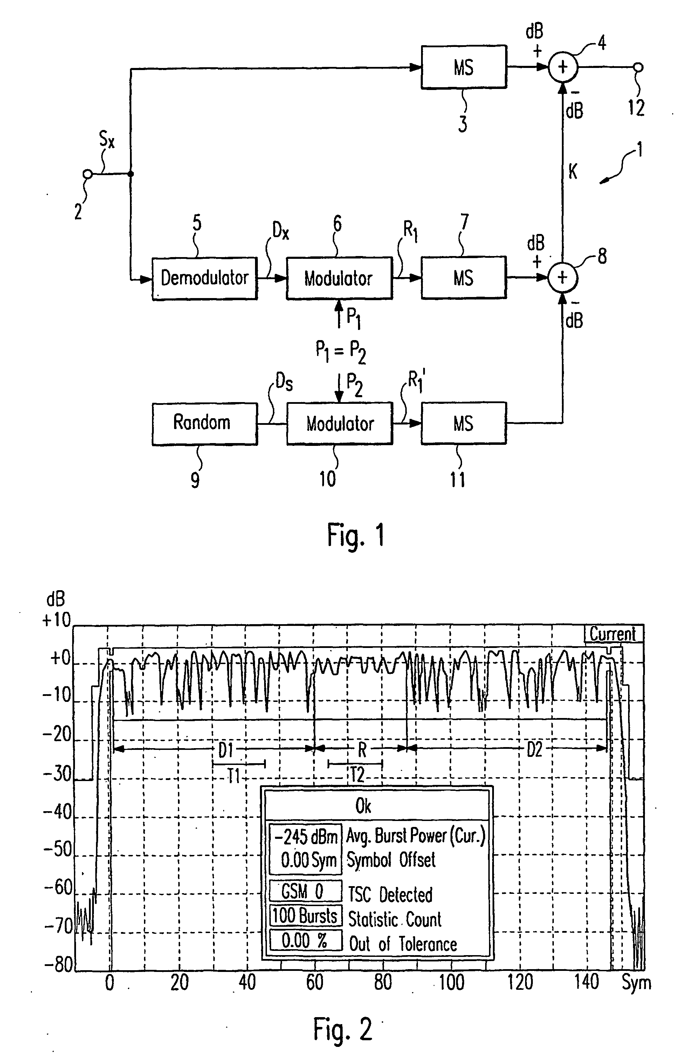

Bevor auf das in Fig. 1 dargestellte Ausführungsbeispiel eingegangen wird, wird zunächst anhand von Fig. 2 ein Beispiel eines Sendeblocks (Burst) im GSM-Format erläutert. Dargestellt ist der Signalpegel in einem logarithmischen Maßstab in Abhängigkeit der Zeit, die in Symbolintervalen skaliert ist. Der aus insgesamt 147 Symbolen bestehende Burst gliedert sich in eine erste Datensequenz D1 eine Referenzsequenz R und eine zweite Datensequenz D2. Aufgrund der IQ-Modulation ist die Amplitude des Signals relativ großen Schwankungen unterworfen. Die Schwankungen betragen im dargestellten Beispiel ca. 15 dB.

Während die Daten in den beiden Datensequenzen D1 und D2 beliebig sind, wird in der Mitte des Bursts über 26 Symbole eine Referenzsequenz R übertragen, die aus einer begrenzten Menge von Referenzsequenzen ausgewählt ist.

Die Problematik bei der Durchführung einer Leistungsmessung an dem in Fig. 2 dargestellten Signal liegt darin, daß aufgrund der modulationsbedingten Amplitudenschwankungen die innerhalb eines Zeitfensters, welche innerhalb des Bursts liegt, gemessene Leistung abhängig von dem Dateninhalt ist, der während dieses Zeitintervals übertragen wird. Bei der Messung interessiert jedoch die durchschnittliche, von dem Dateninhalt unabhängige Langzeit-Leistung. Um diese zu ermitteln, war es bisher üblich, die Leistung innerhalb sehr vieler Bursts zu messen und dann zu mitteln. Da die Meßgenauigkeit proportional zur Wurzel der Einzelmessungen ist, sind sehr viele Einzelmessungen notwendig, um eine befriedigende Meßgenauigkeit zu erreichen. Dies bedingt eine relativ lange Gesamtmeßzeit.

Erfingungsgemäß wird deshalb vorgeschlagen, die innerhalb eines Zeitausschnitts T1 bzw. T2 gemessene Kurzzeit-Leistung mit einem Korrekturfaktor zu bewerten, der von dem Dateninhalt, mit welchem das Signal während des Zeitausschnitts moduliert wurde, abhängt.

Das zu messende Eingangs-Signal Sₓ wird einem Eingangsanschluß 2 einer in der Fig. 1 schematisch dargestellten Meßeinrichtung 1 zugeführt. Bei dem Eingangs-Signal Sₓ handelt es sich um ein digitales Abtast-Signal. In einem ersten Mittelwert-Bilder 3 wird der Mittelwert des zu messenden Eingangs-Signals Sₓ innerhalb des gemessenen Zeitausschnitts gebildet. Der gemessene Zeitausschnitt ist in Fig. 2 beispielhaft als T1 für eine Messung innerhalb der Datensequenz D₁ und T2 für eine Messung innerhalb der Referenzsequenz R verdeutlicht. Die mittlere Leistung wird dadurch berechnet, daß das Quadrat sämtlicher Abtastwerte gebildet wird, die quadrierten Abtastwerte aufaddiert werden und durch die Anzahl der Abtastwerte dividiert wird (MS = mean square). Sofern nicht die mittlere Leistung sondern die mittlere Amplitude interessiert kann zusätzlich noch die Wurzel gezogen werden (RMS = root mean square). Der Ausgang des ersten Mittelwert-Bilders 3 wird dem +Anschluß eines ersten Differenz-Bilders 4 zugeführt.

Um den Dateninhalt innerhalb des gemessenen Ausschnitts T1 bzw. T2 zu ermitteln, wird das Eingangs-Signal Sₓ einem Demodulator 5 zugeführt. Die das Eingangs-Signal Sₓ innerhalb des Ausschnitts T1 bzw. T2 modulierende Datensequenz Dₓ steht am Ausgang des Demodulators 5 zur Verfügung und wird einem ersten Modulator 6 zugeführt. Der Modulator 6 wird mit einer konstanten, vorgegebenen Referenz-Aussteuerung P₁ betrieben. Diese Referenz-Aussteuerung P₁ ist bekannt. Zur Bestimmung der Leistung des mit dem Modulator 6 modulierten Referenz-Signals R₁ dient ein zweiter Mittelwert-Bilder 7, der mit dem Ausgang des ersten Modulators 6 verbunden ist. Die Leistung des Referenz-Signals R₁ wird ebenfalls durch Quadrieren und Mittelwertbilden der quadrierten Amplituden innerhalb des Ausschnitts T1 bzw. T2 berechnet (MS = mean square).

Der Ausgang des zweiten Mittelwert-Bilders 7 wird dem +Anschluß eines zweiten Differenz-Bilders 8 zugeführt. Der zweite Differenz-Bilder 8 vergleicht die datenabhängige Kurzzeit-Leistung des Referenz-Signals R₁ mit einer datenunabhängigen Langzeit-Leistung des Referenz-Signals R₁. Dazu wird ein Referenz-Signal R₁' mit statistischen Daten Dₛ über ein sehr langes Meßinterval erzeugt. In Fig. 1 ist dies schematisch dadurch dargestellt, daß der Ausgang einer statistischen Datenquelle 9 einem zweiten Modulator 10 zugeführt wird, der mit einer Aussteuerung P₂ betrieben wird, die exakt der Aussteuerung P₁ des ersten Modulators 6 entspricht. Der Ausgang des zweiten Modulators 10 wird einem dritten Mittelwert-Bilder 11 zugeführt, der die Abtastwert wiederum quadriert, aufaddiert und durch die Anzahl der Abtastwerte dividiert (MS = mean square), so daß die mittlere Langzeit-Leistung des mit den statistischen Daten Dₛ modulierten Referenz-Signals R₁' am Ausgang des dritten Mittelwert-Bilders 11 zur Verfügung steht. Die so ermittelte mittlere Leistung des Referenz-Signals bei der Aussteuerung P₁ = P₂ ist konstant, so daß die anhand der Blockschaltelemente 9 bis 11 beschriebenen Verfahrensschritte nur einmal durchgeführt werden müssen und der sich ergebende konstante Wert abgespeichert werden kann.

Der Ausgang des dritten Mittelwert-Bilders 11 wird dem - Anschluß des zweiten Differenz-Bilders 8 zugeführt. Am Ausgang des zweiten Differenz-Bilders 8 ergibt sich ein Korrekturwert K, welcher positiv ist, wenn aufgrund der Datenmodulation die für den Referenz-Pegel R₁ gemessene Kurzzeit-Leistung größer als die mit statistischen Daten Dₛ zu erwartende Langzeit-Leistung ist und welcher negativ ist, wenn aufgrund der Datenmodulation sich in dem Meßinterval eine geringere Leistung einstellt, als sie bei einer Langzeitmessung mit statistischen Daten Dₛ zu erwarten ist. Es ist noch darauf hinzuweisen, daß die Mittelwert-Bilder 7 und 11 den Ausgangs-Pegel auf einer logarithmischen Skala bilden, was durch das Symbol "dB" verdeutlicht ist. Deshalb ist eine Subtraktion und keine Quotientenbildung der Ausgangs-Signale erforderlich. Sofern die Mittelwert-Bilder 11 und 7 Ausgangs-Pegel auf einer linearen Skala zur Verfügung stellen, muß der Differenz-Bilder 8 durch einen Quotienten-Bilder ersetzt werden. Der Korrekurwert K ist ebenfalls logarithmisch skaliert und wird dem -Anschluß des ersten Differenzbilders 4 zugeführt, wobei der Korrekturwert K von der innerhalb des Ausschnitts T1 bzw. T2 gemessenen Leistung abgezogen wird. Ergibt sich aufgrund des Dateninhalts eine positive Abweichung von der bei der Modulation mit statistischen Daten Dₛ zu erwartenden Langzeit-Leistung, so wird die gemessene Kurzzeit-Leistung entsprechend nach unten korrigiert. Umgekehrt wird die gemessene Kurzzeit-Leistung nach oben korrigiert, wenn aufgrund der in dem Meßinterval enthaltenen Datensequenz Dₓ sich eine negative Abweichung von der Langzeit-Leistung bei Modulation mit statistischen Daten Dₛ ergibt.

In Fig. 1 ist das erfindungsemäße Verfahren zwar als Blockschaltbild dargestellt. Jedoch muß das erfindungsemäße Verfahren nicht schaltungstechnisch (als Hardware) realisiert werden, sondern kann durch Programmschritte (als Software) vollständig implementiert werden. Am Ausgang 12 steht die gemessene und korrigierte Leistung zur Verfügung.

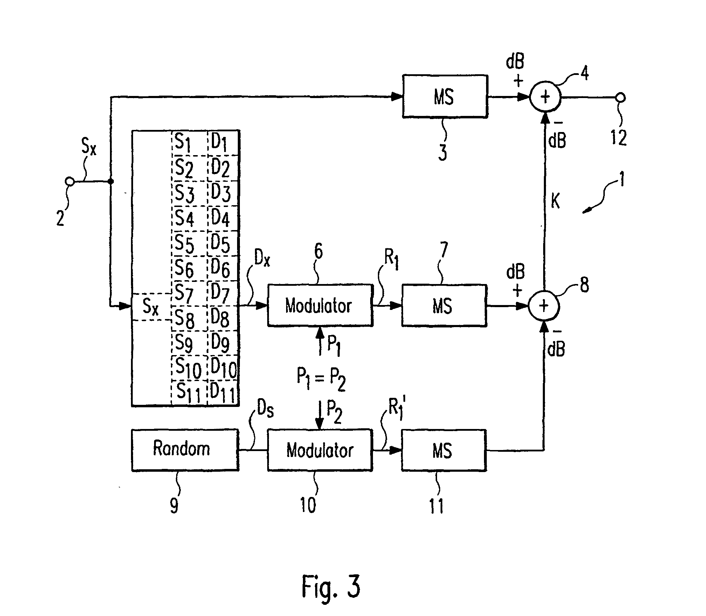

Das in Fig. 1 dargestellte Ausführungsbeispiel eignet sich insbesondere für ein Meßinterval T1 innerhalb der beiden Datensequenzen D₁ bzw. D₂, wenn über den Dateninhalt innerhalb des Meßintervals nichts bekannt ist. Wird jedoch innerhalb der Referenzsequenz R in der Mitte des Bursts gemessen, was in Fig. 2 durch den Ausschnitt T2 verdeutlicht ist, so ist eine Demodulation nicht unbedingt erforderlich, wenn die Referenzsequenz R aus einer begrenzten Anzahl von möglichen Referenzsequenzen ausgewählt ist. Es kann dann das Eingangssignal innerhalb des Meßintervals mit den möglichen Referenzsignals verglichen werden, ohne daß es einer Demodulation bedarf. Ein solches Ausführungsbeispiel ist in Fig. 3 als schematisches Blockschaltbild dargestellt. Bereits anhand von Fig. 1 beschriebene Elemente sind mit übereinstimmenden Bezugszeichen versehen, so daß insoweit auf eine wiederholende Beschreibung verzichtet wird.

Das Eingangs-Signal Sₓ innerhalb des Meßintervals wird mit möglichen Signalverläufen S₁ bis S₁₁ beispielsweise durch eine Korrelation verglichen. Jenes Signal S₁ bis S₁₁ mit der besten Übereinstimmung mit dem Eingangs-Singal Sₓ wird ausgewählt und die diesem Signal entsprechenden Modulationsdaten D₁ bis D₁₁ werden dem Modulator 6 zugeführt. Ein solcher Vergleich kann unter Umständen schneller erfolgen, als eine Demodulation und Demodulationsfehler werden vermieden.

## Patentansprüche

1. Verfahren zur Bestimmung der durchschnittlichen Langzeit-Leistung eines digital modulierten Eingangs-Signals (Sₓ) mit folgenden Verfahrensschritten:
- Bestimmen der Kurzzeit-Leistung eines Ausschnitts (T1; T2) des Eingangs-Signals (Sₓ),
- Erzeugen der in dem Ausschnitt (T1; T2) enthaltenen Datensequenz (Dₓ), mit der das Eingangs-Signal (Sₓ) moduliert ist,
- Erzeugen eines Referenz-Signals (R₁) durch Modulation mit der in dem Ausschnitt (T1; T2) enthaltenen Datensequenz (Dₓ) bei einer vorgegebenen Referenz-Aussteuerung (P₁) eines Modulators (6), wobei die Langzeit-Leistung des Referenz-Signals (R₁) bei der Referenz-Aussteuerung (P₁) bekannt ist,
- Bestimmen der Kurzzeit-Leistung des Referenz-Signals (R₁) innerhalb des Ausschnitts (T1; T2),
- Bestimmen eines Korrekturwerts (K) durch Vergleichen der Kurzzeit-Leistung des Referenz-Signals (R₁) mit der Langzeit-Leistung des Referenz-Signals bei der Referenz-Aussteuerung (P₁), und
- Korrigieren der Kurzzeit-Leistung des Ausschnitts (T1; T2) des Eingangs-Signals (Sₓ) mit dem Korrekturwerts (K), um die Langzeit-Leistung des Eingangs-Signals (Sₓ) zu erhalten.

2. Verfahren nach Anspruch 1,
**dadurch gekennzeichnet,**
**daß** die Langzeit-Leistung des Referenz-Signals (R₁) durch Modulation mit einer statistischen Datensequenz (Dₛ) bei der Referenz-Aussteuerung (P₁) und Mittelung über einen längeren Zeitraum gebildet wird.

3. Verfahren nach Anspruch 2,
**dadurch gekennzeichnet,**
**daß** die Langzeit-Leistung des Referenz-Signals (R₁) einmalig gebildet und in einem Speicher abgelegt wird.

4. Verfahren nach einem der Ansprüche 1 bis 3,
**dadurch gekennzeichnet,**
**daß** die Erzeugung der in dem Ausschnitt des Eingangs-Signals (Sₓ) enthaltenen Datensequenz (Dₓ) durch Demodulation des Eingangs-Signals (Sₓ) erfolgt.

5. Verfahren nach einem der Ansprüche 1 bis 3,
**dadurch gekennzeichnet,**
**daß** die Erzeugung der in dem Ausschnitt des Eingangs-Signals (Sₓ) enthaltenen Datensequenz (Dₓ) durch Vergleich des Eingangs-Signals (Sₓ) mit Vergleichs-Signalen (S₁...S₁₁), die mit unterschiedlichen Datensequenzen (D₁...D₁₁) moduliert sind, erfolgt.

## Claims

1. Process to determine the average long-term power of a digitally modulated input signal (Sₓ) with the following process steps:
- determination of the short-term power of an extract (T1; T2) of the input signal (Sₓ),
- generation of the data sequence (Dₓ) contained in the extract (T1; T2), with which the input signal (Sₓ) is modulated,
- generation of a reference signal (R₁) by modulation with the data sequence (Dₓ) contained in the extract (T1; T2) at a prespecified reference control output (P₁) of a modulator (6), the long-term power of the reference signal (R₁) at the reference control output (P₁) being known,
- determination of the short-term power of the reference signal (R₁) within the extract (T1; T2).
- determination of a correction value (K) by comparing the short-term power of the reference signal (R₁) with the long-term power of the reference signal at the reference control output (P₁), and
- correction of the short-term power of the extract (T1; T2) of the input signal (Sₓ) with the correction value (K) in order to obtain the long-term power of the input signal (Sₓ).

2. Process according to claim 1, **characterised in that** the long-term power of the reference signal (R₁) is formed by modulation with a statistical data sequence (Dₛ) at the reference control output (P₁) and averaging over a lengthy period.

3. Process according to claim 2, **characterised in that** the long-term power of the reference signal (R₁) is formed once and stored in a memory.

4. Process according to any of claims 1 to 3, **characterised in that** the data sequence (Dₓ) contained in the extract of the input signal (Sₓ) is generated by demodulation of the input signal (Sₓ).

5. Process according to any of claims 1 to 3, **characterised in that** the data sequence (Dₓ) contained in the extract of the input signal (Sₓ) is generated by comparison of the input signal (Sₓ) with comparison signals (S₁... S₁₁) which are modulated with different data sequences (D₁...D₁₁).

## Revendications

1. Procédé pour la détermination de l'intensité à long terme moyenne d'un signal d'entrée (Sₓ) numériquement modulé comprenant les étapes de procédé suivantes:
- détermination de l'intensité à court terme d'une partie (T1; T2) du signal d'entrée (Sₓ),
- production de la séquence de données (Dₓ) incluse dans la partie (T1; T2), avec laquelle le signal d'entrée (Sₓ) est modulé,
- production d'un signal de référence (R₁) par modulation avec la séquence de données (Dₓ) contenue dans la partie (T1; T2) avec un amorçage de référence (P₁) prédéfini d'un modulateur (6), l'intensité à long terme du signal de référence (R₁) étant connue pour l'amorçage de référence (P₁),
- détermination de l'intensité à court terme du signal de référence (R₁) à l'intérieur de la partie (T1; T2),
- détermination d'une valeur de correction (K) par comparaison de l'intensité à court terme du signal de référence (R₁) avec l'intensité à long terme du signal de référence pour l'amorçage de référence (P₁), et
- correction de l'intensité à court terme de la partie (T1; T2) du signal d'entrée (Sₓ) avec la valeur de correction (K) pour obtenir l'intensité à long terme du signal d'entrée (Sₓ).

2. Procédé selon la revendication 1,
**caractérisé**
**en ce que** l'intensité à long terme du signal de référence (R₁H) est formée par modulation avec une séquence de données (Dₛ) statistique avec l'amorçage de référence (P₁) et le calcul de la moyenne pour un laps de temps prolongé.

3. Procédé selon la revendication 2,
**caractérisé**
**en ce que** l'intensité à long du signal de référence (R₁H) est formée une fois et est déposée dans une mémoire.

4. Procédé selon l'une quelconque des revendications 1 à 3,
**caractérisé**
**en ce que** la production de la séquence de données (Dₓ) contenue dans la partie du signal d'entrée (Sₓ) s'effectue par démodulation du signal d'entrée (Sₓ).

5. Procédé selon l'une quelconque des revendications 1 à 3,
**caractérisé**
**en ce que** la production de la séquence de données (Dₓ) contenue dans la partie du signal d'entrée (Sₓ) s'effectue par comparaison du signal d'entrée (Sₓ) avec des signaux de comparaison (S₁...S₁₁), qui sont modulés avec différentes séquences de données (D₁...D₁₁).
